# EUROPÄISCHE PATENTSCHRIFT

(11) **EP 1 919 690 B1**
(45) Veröffentlichungstag und Bekanntmachung des Hinweises auf die Patenterteilung: **14.09.2011**
(21) Anmeldenummer: 06775723.7
(22) Anmeldetag: 17.07.2006
(51) Int. Cl.: B29C 49/42, B29C 49/48

(54) **VORRICHTUNG ZUR HERSTELLUNG VON BLASFORMSEGMENTEN**
DEVICE FOR PRODUCING BLOW MOULD SEGMENTS
DISPOSITIF DE RETENUE DE SEGMENTS DE MOULE DE SOUFFLAGE

(30) Priorität: 25.07.2005 DE 102005035233
(43) Veröffentlichungstag der Anmeldung: 14.05.2008
(73) Patentinhaber: KHS Corpoplast GmbH, 22145 Hamburg (DE)
(72) Erfinder: LITZENBERG, Michael, 21502 Geesthacht (DE); LINKE, Michael, 22047 Hamburg (DE); BAUMGARTE, Rolf, 22926 Ahrensburg (DE); LEWIN, Frank, 22889 Tangstedt (DE)
(74) Vertreter: Klickow, Hans-Henning
(86) Internationale Anmeldenummer: PCT/DE2006/001266
(87) Internationale Veröffentlichungsnummer: WO 2007/012308

(56) Entgegenhaltungen:
- DE-A1- 10 152 050
- PATENT ABSTRACTS OF JAPAN Bd. 015, Nr. 120 (M-1096), 25. März 1991 (1991-03-25) & JP 03 009830 A (SHATAI KOGYO KK), 17. Januar 1991 (1991-01-17)

## Beschreibung

Die Erfindung betrifft eine Vorrichtung zur Halterung eines Blasformsegmentes im Bereich einer Blasstation, die mit einem Tragelement für das Blasformsegment versehen ist und bei der das Blasformsegment von mindestens einem Arretierelement lösbar im Bereich des Tragelementes fixierbar ist, und bei der das Arretierelement sowohl zur Bereitstellung einer formschlüssigen Halterung als auch zur Bereitstellung einer kraftschlüssigen Halterung des Blasformsegmentes ausgebildet ist.

Bei einer Behälterformung durch Blasdruckeinwirkung werden Vorformlinge aus einem thermoplastischen Material, beispielsweise Vorformlinge aus PET (Polyethylenterephtalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling ein-geleitet wird. Der verfahrenstechnische Ablauf bei einer derartigen Expansion des Vorformlings wird in der DE-OS 43 40 291 erläutert.

Der grundsätzliche Aufbau einer Blasstation zur Behälterformung wird in der DB-OS 42 12 583 beschrieben. Möglichkeiten zur Temperierung der Vorformlinge werden in der DE -OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die vorformlinge aufgesteckt werden. Die Vorformlinge können aber auch mit anderen Trageinrichtungen gehandhabt werden. Die Verwendung von Greifzangen zur Handhabung von vorformlingen und die Verwendung von Spreizdornen, die zur Halterung in einen Mündungsbereich des Vorformlings einführbar sind, gehören ebenfalls zu den verfügbaren Konstruktionen.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Zur Fixierung von Blasformsegmenten im Bereich der Blasstationen sind unterschiedliche Verfahren und Vorrichtungen bekannt. Zum einen ist eine direkte Verschraubung der Blasformsegmente möglich, ebenfalls sind Schnellverriegelungselemente bekannt, die beispielsweise in der EP-OS 0 821 641 beschrieben werden. Bei der Anwendung aller bekannten Verfahren und Vorrichtungen zur Halterung von Blasformsegmenten ist derzeit ein relativ großer Arbeitsaufwand bei einem Austausch der Blasformsegmente erforderlich. Ein derartiger Austausch erfolgt beispielsweise bei einem Produktwechsel, um Flaschen mit einer geänderten Kontur oder Größe herstellen zu können. Am arbeitsaufwendigsten gestaltet sich ein Austausch von direkt mit dem Tragelement verschraubten Blasformsegmenten. Auch bei einer Verwendung sogenannter Schnellverriegelungen müssen aber eine Vielzahl von Verschraubungen zunächst gelöst und anschließend wieder festgezogen werden.

Aus der DB 101 52 050 A1 ist es bereits bekannt, im Bereich von plattenförmigen Formträgern plattenartige Blasformsegmente anzuordnen. Die Blasformsegmente werden im Bereich ihrer den Formträgern zuwendbaren Rückseiten mit Befestigungsbolzen versehen, die mit ihren Bolzenschäften durch Ausnehmungen der Tragplatten hindurchragen. Im Bereich einer Rückseite der Tragplatten ist eine mit keilförmigen Spannelementen versehene Verriegelungseinrichtung angeordnet. Die keilförmigen Spannelemente können unter Verwendung einer Gewindestange manuell positioniert werden und gleiten hierbei an korrespondierenden Spannflächen der Spannbolzen entlang. Hierdurch werden die Arretierbolzen verspannt und fixiert.

Aus der DE 8 812 265 U1 ist es bekannt, Blasformen zur Durchführung eines Extrusionsblasens auf Schließplatten anzuordnen. Blasformen werden unter Verwendung von Spannbolzen und Tellerfederpaketen gegenüber den Schließplatten verspannt.

In der US 5 968 560 A werden Innenschalen einer Blasform unter Verwendung von einzelnen Haltelaschen mit Außenschalen der Blasform verbunden. Die Haltelaschen werden hierbei mit den Außenschalen verschraubt. Die Laschen überdecken hierbei die Innenschalen und stellen eine formschlüssige Verbindung bereit.

In der DE 4 434 746 A1 wird eine Spritzgußeinrichtung mit einer Spannvorrichtung für die verwendeten Spritzgießwerkzeuge beschrieben. Die Spannvorrichtung ist unter Verwendung einer Zahnstange sowie eines Schwenkhebels konstruiert.

Aufgabe der vorliegenden Erfindung ist es, eine Vorrichtung der einleitend genannten Art derart zu konstruieren, daß eine einfache und wenig zeitaufwendige Handhabung unterstützt wird.

Diese Aufgabe wird erfindungsgemäß durch die Merkryalskombination gemäß dem Anspruch 1. gelöst.

Die Ausbildung des Arretierelementes sowohl zur formschlüssigen als auch zur kraftschlüssigen Halterung des Blasformsegmentes ermöglicht ein Lösen und Festziehen des Arretierelementes in einem Arbeitsgang und ohne die Notwendigkeit, vorab Verschraubungen zu lösen oder anschließend wieder festzuziehen. Durch eine Positionsveränderung des Arretierelementes wird ausgehend von einem arretierten Zustand typischerweise zunächst der Kraftschluß und anschließend der Formschluß aufgehoben. Das Blasformsegment kann dann aus dem Bereich des Tragelementes entfernt und durch ein anderes Blasformsegment ersetzt werden. Anschließend erfolgt eine erneute Betätigung des Arretierelementes, um zunächst wieder den Formschluß und anschließend den Kraftschluß herzustellen. Das Lösen des Arretierelementes, der Austausch des Blasformsegmentes sowie das anschließende erneute Fixieren des Arretierelementes können in einer extrem kurzen Zeit durchgeführt werden. Bei entsprechender Bereitstellung der erforderlichen Teile kann ein Arbeitsaufwand je Blasstation von weniger als einer Minute für einen Austausch beider Formhälften realisiert werden.

Eine sichere Fixierung wird dadurch unterstützt, daß das Arretierelement das Blasformsegmente mit mindestens zwei Arretierlaschen haltert.

Zur Ermöglichung einer einfachen mechanischen Positionierbarkeit ist vorgesehen, daß die Arretierlaschen starr von einem gemeinsamen Basiselement miteinander verbunden sind.

Ein einfacher mechanischer Grundaufbau wird dadurch unterstützt, daß das Basiselement gemeinsam mit einem Positionierelement das Arretierelement ausbildet.

Zur definierten Vorgabe von Bewegungsabläufen ist vorgesehen, daß das Basiselement und das Führungselement durch mindestens ein Verbindungselement spielbehaftet miteinander verbunden sind.

Eine hohe mechanische Stabilität wird dadurch unterstützt, daß das Verbindungselement vorsprungartig in einen Führungsschlitz eingreift.

Zur Bereitstellung eines Spiels bei der Bewegungskopplung zwischen dem Positionierelement und dem Basiselement wird vorgeschlagen, daß das Verbindungselement stiftartig ausgebildet ist.

Zur Ermöglichung eines Bewegungsablaufes sowohl in einer Quer- als auch in einer Längsrichtung ist vorgesehen, daß der Führungsschlitz im wesentlichen L-förmig ausgebildet ist.

Eine besonders effektive Bewegungskopplung wird dadurch erreicht, daß das Basiselement und das Positionierelement auf mindestens einem gemeinsamen Führungselement gelagert sind.

Eine Bewegungsmöglichkeit des Positionierelementes in einer Längsrichtung wird dadurch vorgegeben, daß das Positionierelement mit einem Langloch auf dem Führungselement gelagert ist.

Zur Ermöglichung einer Bewegung des Basiselementes sowohl in Richtung der Längsachse als auch quer zur

Längsachse wird vorgeschlagen, daß das Basiselement mit einem Diagonalloch auf dem Führungselement gelagert ist und daß eine Längsrichtung des Diagonalloches schräg zu einer Längsachse des Positionierelementes angeordnet ist.

Eine einfache Bedienbarkeit wird dadurch realisiert, daß das Arretierelement von einem Hebel positionierbar ist.

Zur Ermöglichung einer Einbringung von relativ großen Stellkräften bei geringer manueller Betätigungskraft ist vorgesehen, daß der Hebel als Kipphebel angeordnet ist.

Eine hohe Bedienungsfreundlichkeit wird dadurch erreicht, daß der Hebel vom Arretierelement trennbar ausgebildet ist.

Die Transformation geringer Bedienkräfte in große Stellkräfte durch eine vorteilhafte Hebelübersetzung wird dadurch erreicht, daß der Hebel durch eine Ausnehmung des Positionierelementes hindurch geführt und mit einem Endstück in einer Ausnehmung des Tragelementes abgestützt ist.

Zur Unterstützung der kraftschlüssigen Verbindung ist vorgesehen, daß das Basiselement und das Positionierelement durch mindestens eine Feder gegeneinander verspannbar angeordnet sind.

Zur Halterung des Arretierelementes in einer entriegelten Position ohne Aufbringung permanenter Bedienkräfte ist vorgesehen, daß das Arretierelement in einem entriegelten Zustand von mindestens einer Rastung fixierbar angeordnet ist.

Die erforderlichen Verspannvorgänge können in einfacher Weise dadurch durchgeführt werden, daß das Positionierelement durch mindestens eine Keilfläche gegenüber dem Basiselement verspannbar angeordnet ist.

Ein typisches Anwendungsgebiet wird dadurch definiert, daß das Blasformsegment als eine Forminnenschale und das Tragelement als eine Formaußenschale ausgebildet sind.

Eine einfache Grundkonstruktion wird dadurch unterstützt, daß das Blasformsegment und das Tragelement an zwei einander gegenüberliegenden Bereichen miteinander verbunden sind und daß die erste dieser Verbindungen durch das Arretierelement und die zweite der Verbindungen durch mindestens eine unbeweglich angeordnete Klemmlasche ausgebildet sind.

In den Zeichnungen sind Ausführungsbeispiele der Erfindung schematisch dargestellt. Es zeigen:
- Fig. 1: Eine perspektivische Darstellung einer Blas- station zur Herstellung von Behältern aus Vor- formlingen,
- Fig. 2: einen Längsschnitt durch eine Blasform, in der ein Vorformling gereckt und expandiert wird,
- Fig. 3: eine Skizze zur veranschaulichung eines grund- sätzlichen Aufbaus einer Vorrichtung zur Blas- formung von Behältern,
- Fig. 4: eine modifizierte Heizstrecke mit vergrößerter Heizkapazität,
- Fig. 5: eine teilweise Darstellung eines Längsschnit- tes durch eine Blasstation im Bereich der Ar- retiereinrichtung im entriegelten zustand,
- Fig. 6: die Arretiereinrichtung gemäß Fig. 5 in einem arretierten Zustand,
- Fig. 7: eine vergrößerte teilweise Darstellung eines Querschnittes durch die Arretiereinrichtung in einem arretierten Zustand,
- Fig. 8: eine Darstellung entsprechend Fig. 7 in einem gelösten Zustand der Arretiereinrichtung,
- Fig. 9: eine Seitenansicht eines von der Arretierein- richtung im Bereich des Tragelementes gehal- terten Blasformsegmentes im arretierten Zu- stand,
- Fig. 10: eine Darstellung entsprechend Fig. 9 in einem gelösten Zustand der Arretiereinrichtung,
- Fig. 11: eine perspektivische Darstellung einer Ansicht ähnlich zur Fig. 9 im arretierten Zustand,
- Fig. 12: eine Darstellung ähnlich zu Fig. 11 in einem gelösten Zustand der Arretiereinrichtung,
- Fig. 13: eine Darstellung der Arretiereinrichtung im arretierten Zustand gemäß Fig. 11 bei einer Blickrichtung schräg von hinten,
- Fig. 14: eine Darstellung entsprechend Fig. 13 in einem Zustand, in dem bereits ein Kraftschluß, nicht jedoch ein Formschluß aufgehoben wurde und
- Fig. 15: eine Ansicht ähnlich zu Fig. 13 und Fig. 14 in einem vollständig gelösten Zustand der Arre- tiereinrichtung.

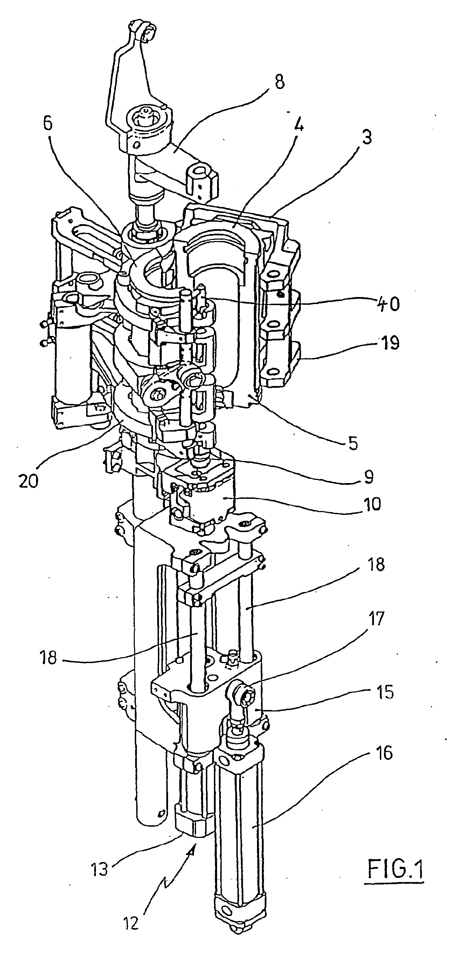

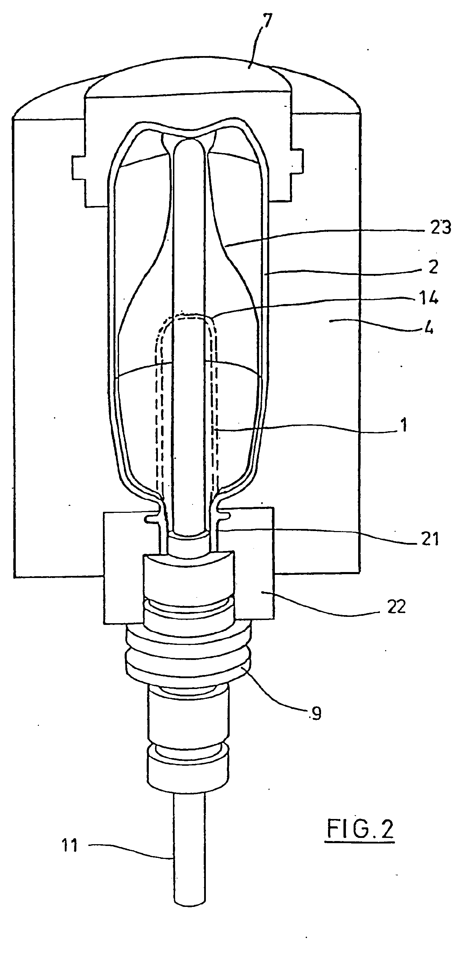

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt mit Hilfe einer Reckstange (11), die von einem Zylinder (12) positioniert wird. Grundsätzlich ist es aber auch denkbar, eine mechanische Positionierung der Reckstange (11) über Kurvensegmente durchzuführen, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind. Eine Verwendung von Zylindern (12) ist zweckmäßig, wenn ortsfest angeordnete Blasstationen (3) vorgesehen sind.

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (40).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den vorformling (1) und schematisch eine sich entwickelnde Behälterblase (23).

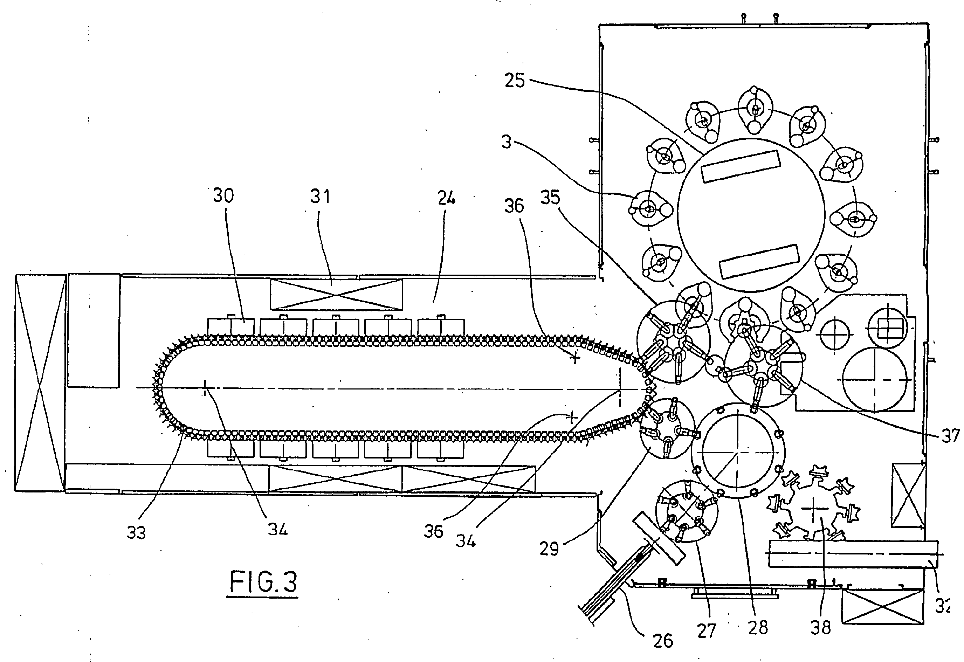

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimen-sionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druck-luft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

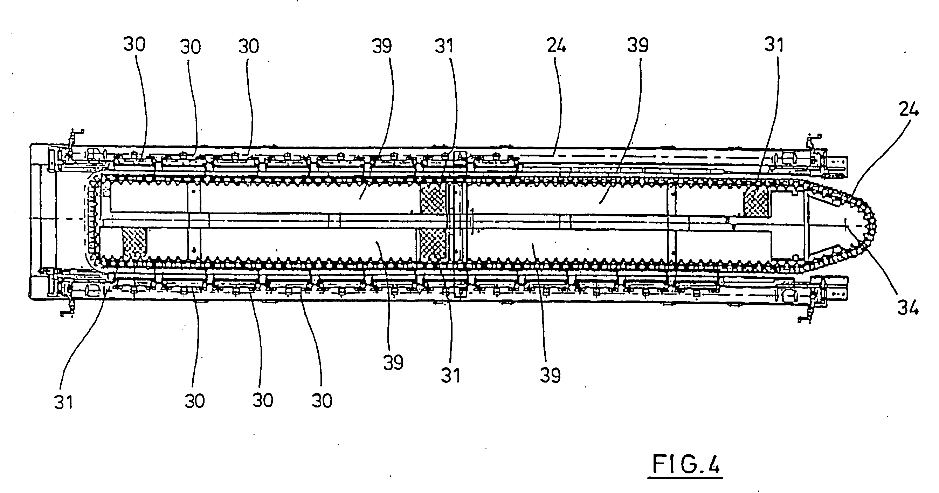

In der in Fig. 4 dargestellten modifizierten Heizstrekke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

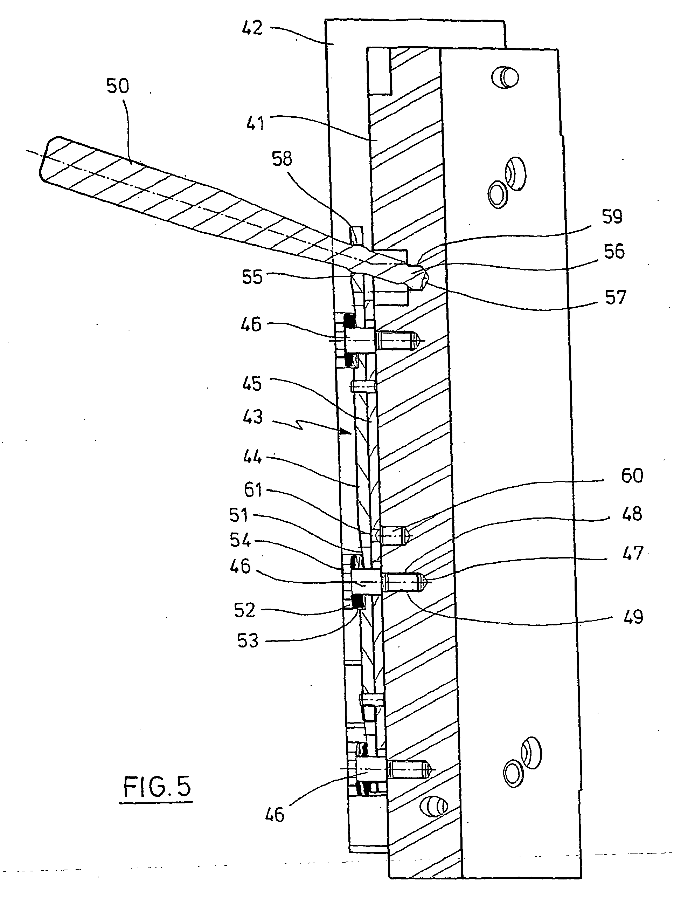

Fig. 5 zeigt einen Querschnitt durch ein von einem Tragelement (41) gehaltertes Blasformsegment (42). Beim Tragelement (41) kann es sich um einen der Formträger (19, 20) gemäß Fig. 1 handeln, das Blasformsegment (42) kann als eine der Formhälften (5, 6) gemäß Fig. 1 realisiert sein. Gemäß einer weiteren Ausführungsform ist das Blasformsegment (42) als eine Forminnenschale ausgebildet, die von einem als Formaußenschale realisierten Tragelement (41) gehaltert ist.

Zur lösbaren Fixierung des Blasformsegmentes (42) im Bereich des Tragelementes (41) ist ein Arretierelement (43) verwendet, das gemäß der Ausführungsform in Fig. 5 aus einem Positionierelement (44) sowie einem mindestens bereichsweise zwischen dem Positionierelement (44) und dem Tragelement (41) angeordneten Basiselement (45) ausgebildet ist.

Sowohl das Positionierelement (44) als auch das Basiselement (45) sind im Bereich von Führungselementen (46) beweglich gelagert. Beim Ausführungsbeispiel gemäß Fig. 5 sind drei Führungselemente (46) verwendet, die als Bolzen ausgebildet sind. Die Führungselemente (46) sind hierbei mit Außengewinden (47) in Innengewinde (48) eingeschraubt, die im Bereich von Halterungsausnehmungen angeordnet sind. Die Halterungsausnehmungen (49) können beispielsweise als Bohrungen im Tragelement (41) realisiert sein.

Fig. 5 zeigt einen gelösten Zustand des Arretierelementes (43). Das Arretierelement (43) ist hierzu unter Verwendung eines Hebels (50) derart verschoben worden, daß Keilflächen (51) des Positionierelementes (44) relativ zu Andrückflächen (52) verschoben angeordnet sind. Beim Ausführungsbeispiel gemäß Fig. 5 sind zwischen den Andrückflächen (52) und den Keilflächen (51) Federn (53) angeordnet. Die Federn (53) ermöglichen die Vorgabe definierter Spannkräfte und unterstützen ein leicht gängiges Lösen des Arretierelementes (43). Beim dargestellten Ausführungsbeispiel sind die Federn (53) als Tellerfedern ausgebildet und die Andrückflächen (52) sind im Bereich von Bolzenköpfen der Führungselemente (46) angeordnet.

Der Hebel (50) ist durch eine Ausnehmung (55) im Positionierelement (44) hindurchgeführt und ragt mit einem Endstück (56) in eine Ausnehmung (57) des Tragelementes (41) hinein. Zur Unterstützung einer reibungsarmen Bewegung ist der Hebel (50) über gerundete Abrollflächen (58, 59) im Bereich der Ausnehmungen (55, 57) geführt. Fig. 5 zeigt den Hebel (50) in einem hochgeschwenkten Zustand, der zu einer Aufwärtspositionierung des Positionierelementes (44) führt. Bei der in Fig. 5 dargestellten Ausführungsform ist der Hebel (50) in einem in lotrechter Richtung oberen Bereich des Positionierelementes (40) angeordnet. Grundsätzlich kann die Anordnung aber auch in einem in lotrechter Richtung unteren Bereich des Positionierelementes (40) oder auch in jedem anderen zwischen den beiden Enden des Positionierelementes (44) liegenden ausreichend gut zugänglichen Bereich angeordnet werden.

Zur Vermeidung einer unbeabsichtigten Verstellung des Arretierelementes (43) in dem in Fig. 5 dargestellten gelösten zustand wird ein Rastelement (60) verwendet. Beim dargestellten Ausführungsbeispiel wird das Rastelement (60) vom Tragelement (41) gehaltert und greift in eine Ausnehmung (61) des Basiselementes (55) ein. Prinzipiell ist es auch möglich, das Rastelement (60) im Bereich des Basiselementes (45) zu positionieren und ein entsprechendes Gegenelement im Bereich des Tragelementes (41) anzuordnen. Das Rastelement (60) kann beispielsweise als federbelastete Kugel realisiert sein.

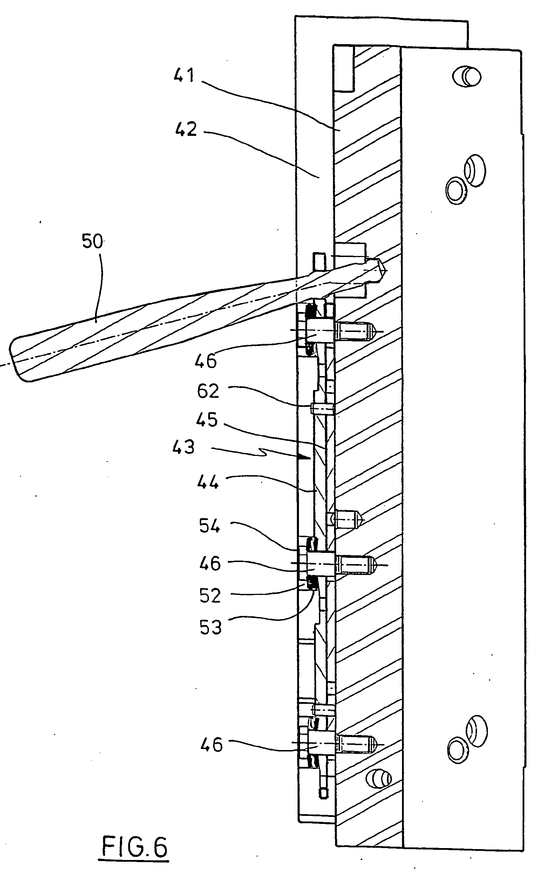

Fig. 6 zeigt die Anordnung gemäß Fig. 5 in einem Verrieglungszustand des Arretierelementes (43). Gegenüber der Anordnung in Fig. 5 wurde hierzu der Hebel (50) nach unten verschwenkt und führte hierdurch eine Verschiebung des Positionierelementes (44) durch. Die Federn (53) werden hierdurch zwischen den Keilflächen (51) und den Andrückflächen (52) verspannt.

Zusätzlich zu einer Verschiebung des Positionierelementes (44) erfolgt auch eine Verschiebung des Basiselementes (45). Dies wird durch Verbindungselemente (62) erreicht, die in die Elemente (43, 44) eingreifen und diese spielbehaftet miteinander verbinden.

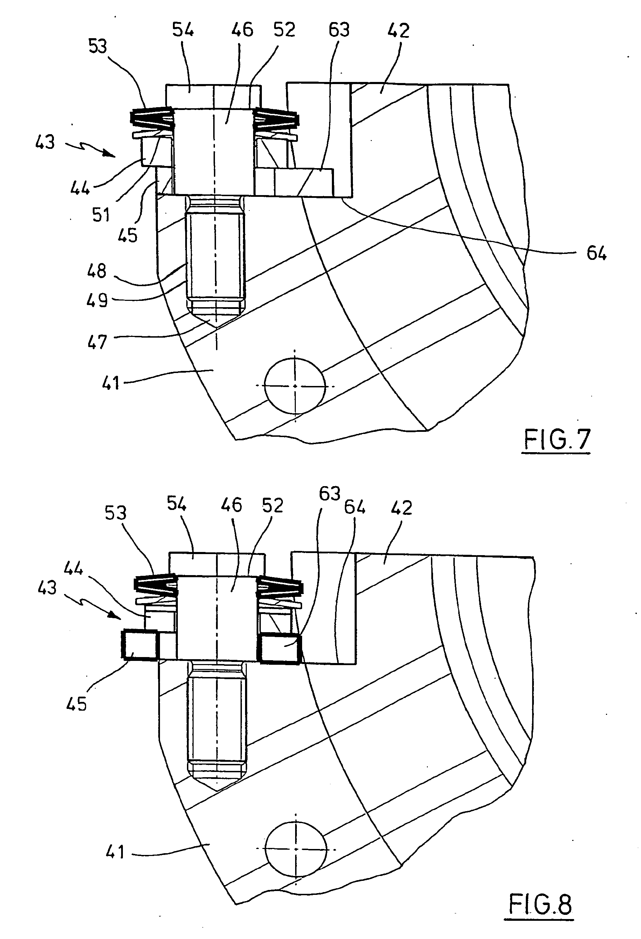

Das Funktionsprinzip der sowohl formschlüssigen als auch kraftschlüssigen Arretierung wird in Fig. 7 und Fig. 8 weiter erläutert. Fig. 7 zeigt einen Querschnitt durch die Anordnung in einem arretierten Zustand. Das Basiselement (47) ist hierbei mit Arretierlaschen (63) über Halterungsflächen (64) des Blasformsegmentes (42) geführt und stellt eine formschlüssige Verbindung her. Die Federn (53) stellen darüber hinaus über die Keilflächen (51) eine Verspannung bereit und führen zu einer kraftschlüssigen Verbindung.

Gemäß der Darstellung in Fig. 8 ist das Basiselement (45) nach einer Durchführung der Entriegelung in eine der Halterungsfläche (64) entgegengesetzte Richtung verschoben und die Arretierlaschen (63) geben hierdurch die Halterungsflächen (64) frei. Zusätzlich ist die Feder (53) entspannt, so daß der Kraftschluß aufgehoben ist. In dem in Fig. 8 dargestellten entriegelten Zustand kann das Blasformsegment (42) somit aus dem Tragelement entnommen werden.

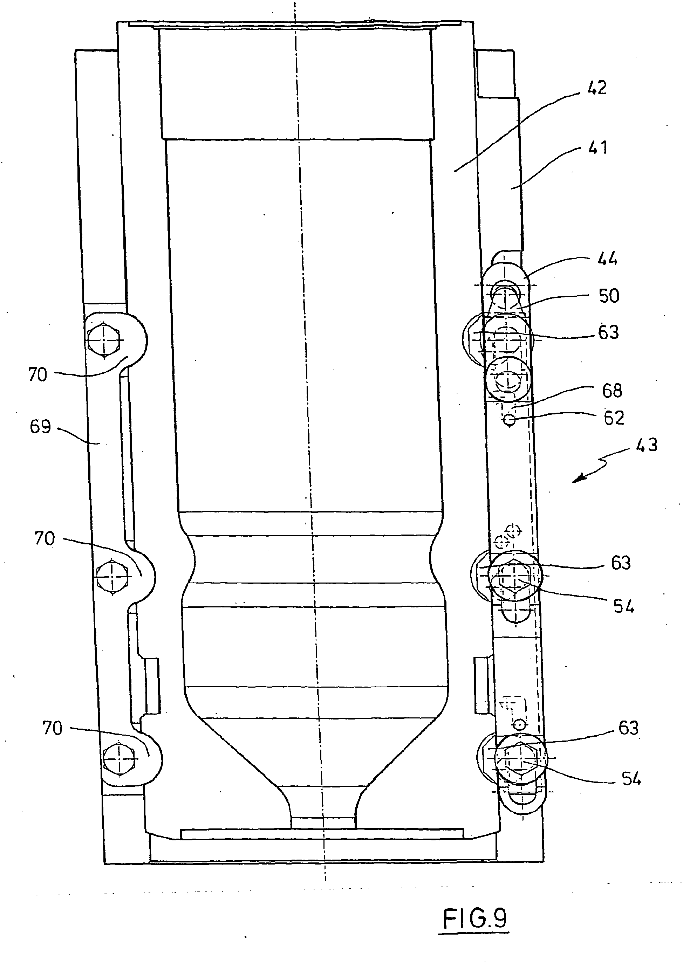

Fig. 9 zeigt eine weitere Darstellung zur Veranschaulichung der Kopplung zwischen dem Positionierelement (44) und dem Basiselement (45). Es ist zu erkennen, daß das Positionierelement (44) über Langlöcher (65) auf den Führungselementen (46) gelagert ist. Das Basiselement (45) ist über Diagonallöcher (66) auf den Führungselementen gelagert. Auch die Diagonallöcher (66) sind als Langlöcher ausgeführt, weisen jedoch eine andere räumliche Orientierung als die Langlöcher (65) auf. Die Langlöcher (65) erstrecken sich im wesentlichen in Richtung einer Längsachse (67) des Positionierelementes (44), die Diagonallöcher (66) verlaufen schräg zu dieser Längsachse (67). Fig. 9 veranschaulicht ebenfalls, daß die Verbindungselemente (62) vom Basiselement (45) gehaltert sind und in Führungsschlitze (68) des Positionierelementes (44) eingreifen. Grundsätzlich ist auch eine vertauschte Anordnung der Führungsschlitze (68) und der Verbindungselemente (62) realisierbar.

Die Führungsschlitze (68) verlaufen im wesentlichen L-förmig, wobei sich ein längerer Bereich des Führungsschlitzes im Bereich der Längsachse (67) und ein kürzerer Bereich quer zur Längsachse (67) erstreckt. Der kürzere Schenkel des Führungsschlitzes (68) verläuft hierbei ausgehend vom längeren Schenkel in Richtung auf das Blasfoarmsegment (42).

Fig. 9 zeigt ebenfalls, daß das Blasformsegment (42) zweiseitig im Bereich des Tragelementes (41) fixiert ist. Eine Fixierung erfolgt unter Verwendung des Arretierelementes (43), die andere Fixierung unter Verwendung einer Klemmlasche (69). Die Klemmlasche (69) überdeckt mit Vorsprüngen (70) das Blasformsegment (42) und führt hierdurch ebenfalls eine formschlüssige Halterung durch. Nach einem Lösen des Arretierelementes (43) kann das Blasformsegment (42) ohne ein Lösen der Klemmlasche (69) unter den Vorsprüngen (70) herausgezogen werden.

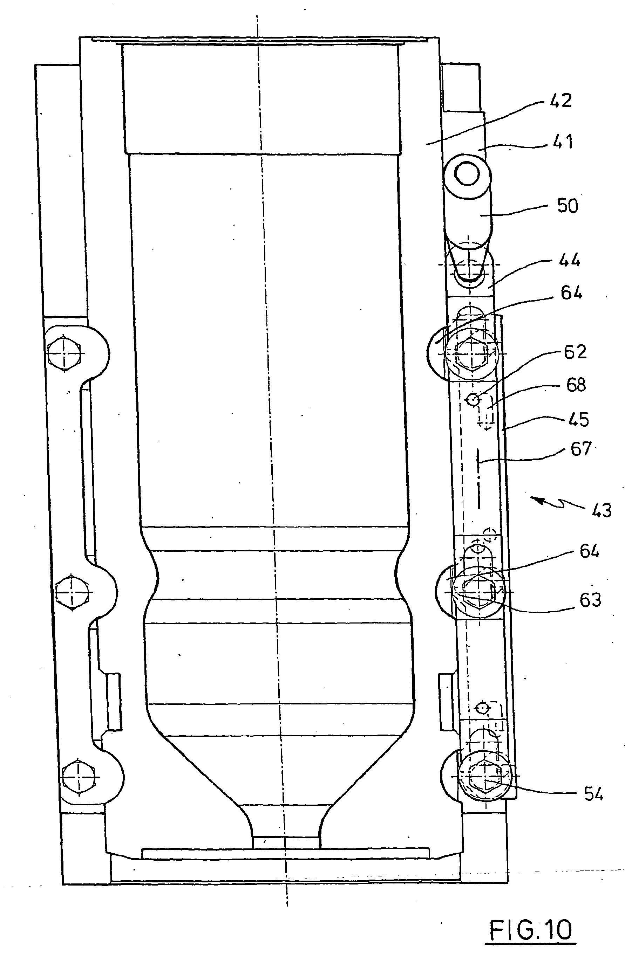

Gemäß der Darstellung in Fig. 10 wurde der Hebel (50) nach oben verschwenkt und hierdurch ebenfalls eine Verschiebung des Positionierelementes (44) nach oben hervorgerufen. Aufgrund der Kopplung zwischen dem Positionierelement (44) und dem Basiselement (45) erfolgte nach einem durch die Länge des Führungsschlitzes (68) vorgegebenen Freilauf nach einer Anlage des Verbindungselementes (62) am oberen Rand des Führungsschlitzes (68) ein Mitnehmen des Basiselementes (45) in Bewegungsrichtung des Positionierelementes (44) und somit in Richtung der Längsachse (67). Durch eine nachfolgend noch näher erläuterte mechanische Kopplung erfolgt zusätzlich eine Querpositionierung des Basiselementes (45) quer zur Längsachse (67) in eine dem Blasformsegment (42) abgewandte Richtung derart, daß die Halterungsflächen (64) des Blasformsegmentes (42) nicht mehr von den Arretierlaschen (63) überdeckt sind. In diesem Zustand ist ein Herausnehmen des Blasformsegmentes (42) aus dem Tragelement (41) möglich.

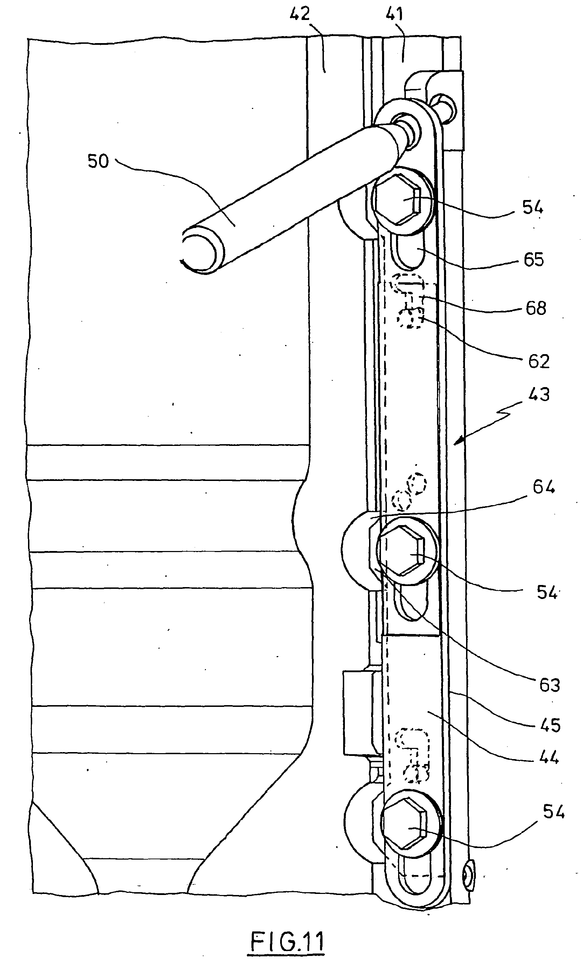

Fig. 11 zeigt eine Darstellung ähnlich zu Fig. 9, jedoch bei einer perspektivischen Sichtweise. Das Arretierelement (63) ist hierbei durch den Hebel (50) in die Arretierposition überführt, so daß die Arretierlaschen (63) die Halterungsflächen (64) zur Bereitstellung eines Formschlusses überdecken.

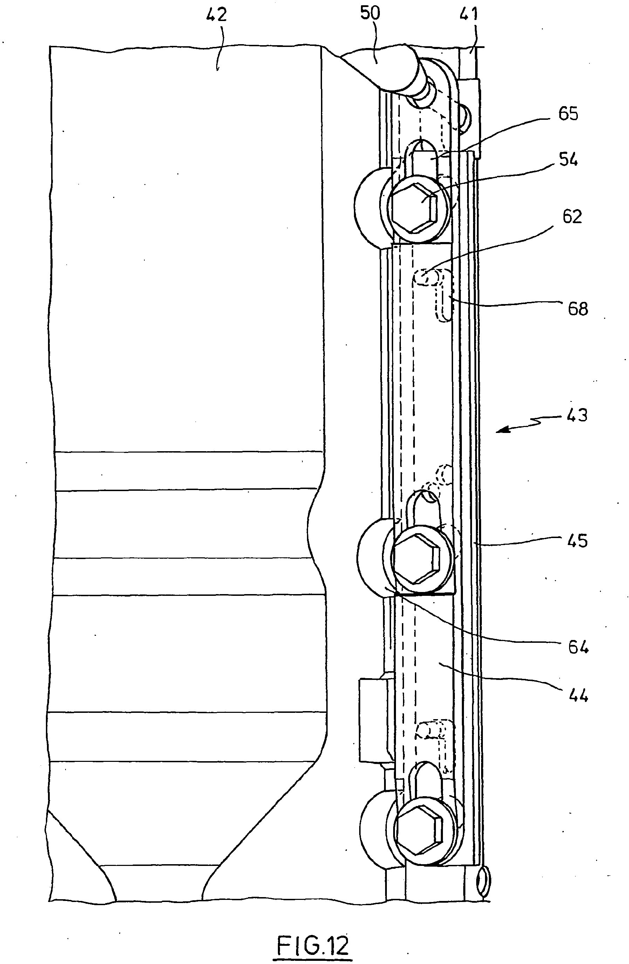

Fig. 12 zeigt die Anordnung gemäß Fig. 11 nach einem Hochschwenken des Hebels (50). Das Arretierelement (43) ist hierdurch soweit nach oben verschoben, daß die Arretierlaschen (63) die Halterungsflächen (64) freigeben. Innerhalb des L-förmigen Führungsschlitzes (68) befindet sich das Verbindungselement (62) im Endbereich des kurzen Schenkels des L-Profils.

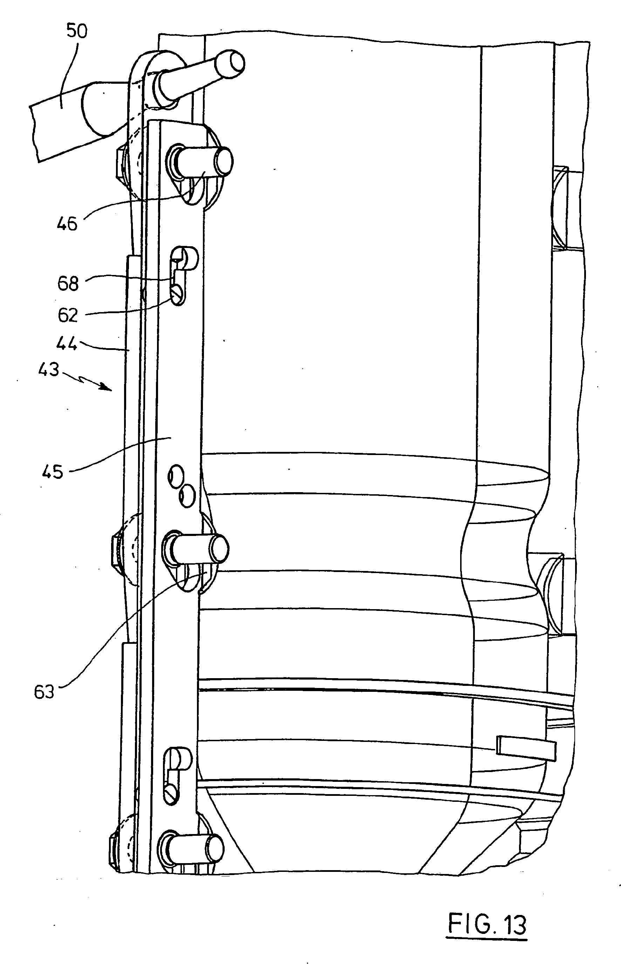

Fig. 13 zeigt in einer weiteren perspektivischen Darstellung das Arretierelement (43) im Verriegelungszustand gemäß Fig. 11 bei einer Blickrichtung aus der Blasstation (3) heraus. Zur Verdeutlichung der Anordnung des Positionierelementes (44) und des Basiselementes (45) sind das jeweils zugehörige Tragelement (41) sowie das Blasformsegment (42) nicht dargestellt. Zu erkennen sind lediglich die entsprechenden Bauelemente der gegenüberliegenden Blasformhälfte.

Fig. 13 veranschaulicht insbesondere, daß das Positionierelement (44) und das Basiselement (45) mit ihren zugehörigen Langlöchern (65) sowie Diagonallöchern (66) gemeinsam auf den jeweils zugeordneten Führungselementten (46) gelagert sind. Fig. 13 zeigt einen Betriebszustand, in dem sowohl das Positionierelement (44) als auch das Basiselement (45) durch den Hebel (50) abgesenkt angeordnet ist und die Arretierlaschen (63) in Richtung auf das zu halternden Blasformsegmentes (42) verschoben sind.

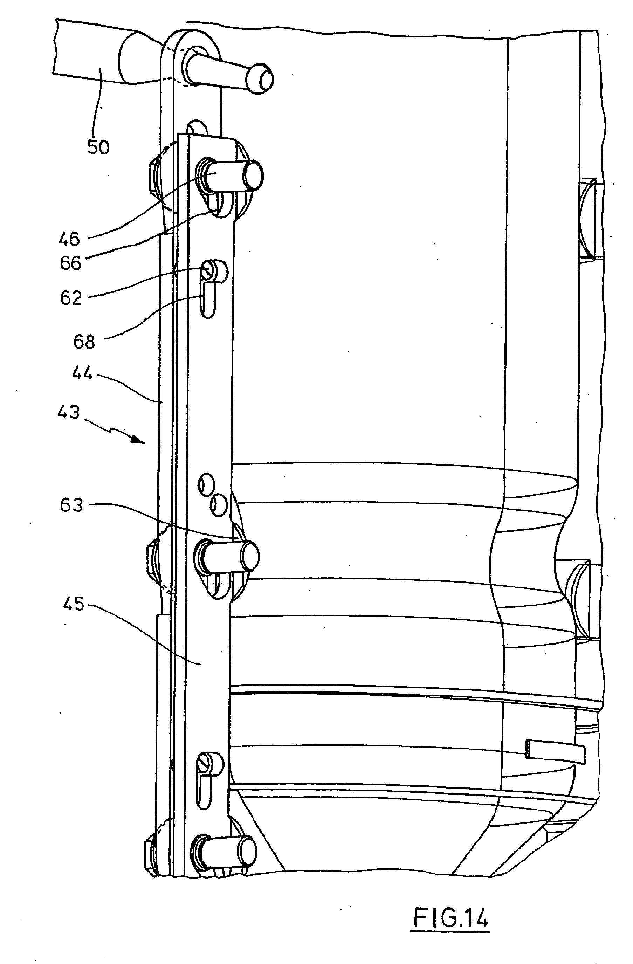

Fig. 14 zeigt einen Betriebszustand, bei dem das Positionierelement (44) durch den Hebel (50) derart weit angehoben ist, daß bereits der Kraftschluß aufgehoben wurde. Der Formschluß liegt jedoch noch vor. Das Positionierelement (44) wurde hierbei soweit angehoben, daß das Verbindungselement (62) gerade die Oberbegrenzung des Führungsschlitzes (68) erreicht hat. Eine Positionsveränderung des Basiselementes (45) hat gegenüber der Positionierung in Fig. 13 noch nicht stattgefunden.

Die Arretierlaschen (63) befinden sich somit noch in der Ausgangspositionierung. Die beispielsweise in Fig. 12 erkennbaren Langlöcher (65) des Positionierelementes (44), die in Fig. 14 nicht zu erkennen sind, sind in Fig. 14 etwa derart angeordnet, daß die Führungselemente (46) in einem mittleren Bereich der Langlöcher (65) angeordnet sind.

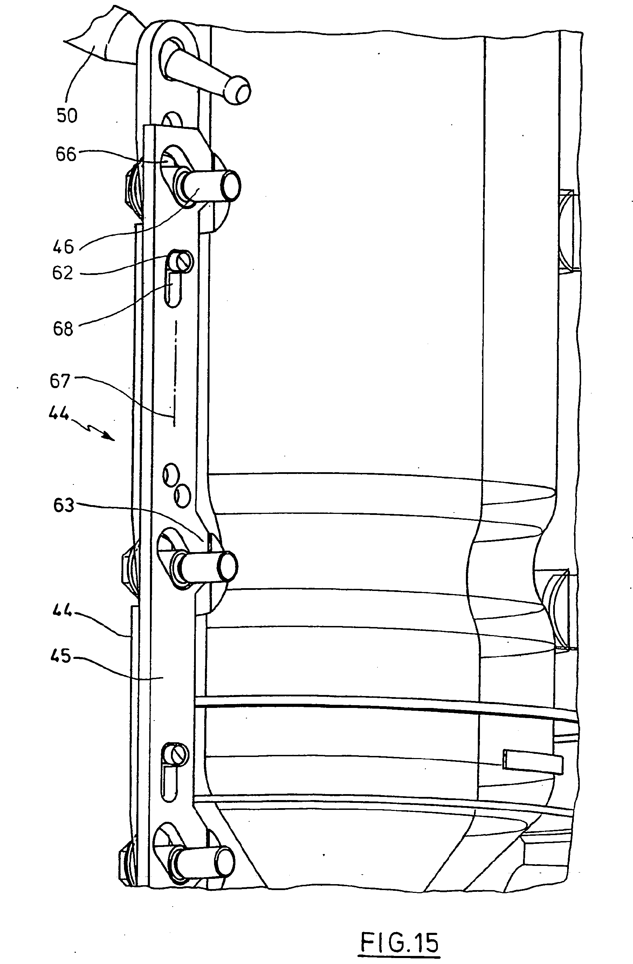

Gemäß der Endpositionierung in Fig. 15 erfolgte ein weiteres Anheben des Positionierelementes (44) unter Verwendung des Hebels (50). Da das Verbindungselement (62) bereits gemäß der Positionierung in Fig. 14 am oberen Rand des Führungsschlitzes (68) angelegen hat, erfolgte durch das weitere Anheben des Positionierelementes (44) auch eine Verschiebung des Basiselementes (45). Da das Basiselement mit seinen Diagonalloch (66) auf dem Führungselement (46) gelagert ist, verursacht die relativ zur Längsachse (67) schräge Orientierung des Diagonalloches (66) zusätzlich zur Translation des Basiselementes (45) in Richtung der Längsachse (67) auch eine Querbewegung des Basiselementes (45). Durch die Querbewegung wird das Basiselement (45) in eine dem Blasformsegment (42) abgewandte Richtung verschoben und die Arretierlaschen (62) geben hierdurch die zugeordneten Halterungsflächen (64) des Blasformsegmentes (42) frei.

## Patentansprüche

1. Vorrichtung zur Halterung eines Blasformsegmentes (42) im Bereich einer Blasstation (3), die mit einem Tragelement (41) für das Blasformsegment (42) versehen ist und bei der das Blasformsegment (42) von mindestens einem Arretierelement (43) lösbar im Bereich des Tragelementes (41) fixierbar ist, und bei der das Arretierelement (43) sowohl zur Bereitstellung einer formschlüssigen Halterung als auch zur Bereitstellung einer kraftschlüssigen Halterung des Blasformsegmentes (42) ausgebildet ist, wobei das Blasformsegment (42) als eine Forminnenschale und das Tragelement (41) als eine Formaußenschale ausgebildet sind, und wobei das Blasformsegment (42) zweiseitig im Bereich des Tragelementes (41) fixierbar ist, **dadurch gekennzeichnet, daß** das Arretierelement (43) das Blasformsegment (42) mit mindestens zwei Arretierlaschen (63) haltert, daß die Arretierlaschen (63) starr von einem gemeinsamen Basiselement (45) miteinander verbunden sind
und daß das Basiselement (45) quer zu einer Längsachse (67) eines Positionierelements (44) positionierbar ist, wobei das Basiselement (45) gemeinsam mit einem Positionierelement (44) das Arretierelement (43) ausbildet.

2. Vorrichtung nach Anspruch 1, **dadurch gekennzeichnet, daß** das Basiselement (45) und ein Führungselement (46) durch mindestens ein Verbindungselement (62) spielbehaftet miteinander verbunden sind.

3. Vorrichtung nach Anspruch 2, **dadurch gekennzeichnet, daß** das Verbindungselement (62) vorsprungartig in einem Führungsschlitz (68) eingreift.

4. Vorrichtung nach Anspruch 2 oder 3, **dadurch gekennzeichnet, daß** das Verbindungselement (62) stiftartig ausgebildet ist.

5. Vorrichtung nach Anspruch 3, **dadurch gekennzeichnet, daß** der Führungsschlitz (68) im wesentlichen L-förmig ausgebildet ist.

6. Vorrichtung nach einem der Ansprüche 1 bis 5, **dadurch gekennzeichnet, daß** das Basiselement (45) und das Positionierelement (44) auf mindestens einem gemeinsamen Führungselement (46) gelagert sind.

7. Vorrichtung nach einem der Ansprüche 1 bis 6, **dadurch gekennzeichnet, daß** das Positionierelement (44) mit einem Langloch (65) auf dem Führungselement (46) gelagert ist.

8. Vorrichtung nach einem der Ansprüche 1 bis 7, **dadurch gekennzeichnet, daß** das Basiselement (45) mit einem Diagonalloch (66) auf dem Führungselement (46) gelagert ist und daß eine Längsrichtung des Diagonalloches (66) schräg zu einer Längsachse (67) des Positionierelementes (44) angeordnet ist.

9. Vorrichtung nach einem der Ansprüche 1 bis 8, **dadurch gekennzeichnet, daß** das Arretierelement (63) von einem Hebel (50) positionierbar ist.

10. Vorrichtung nach Anspruch 9, **dadurch gekennzeichnet, daß** der Hebel (50) als Kipphebel angeordnet ist.

11. Vorrichtung nach Anspruch 9 oder 10, **dadurch gekennzeichnet, daß** der Hebel (50) vom Arretierelement (43) trennbar ausgebildet ist.

12. Vorrichtung nach einem der Ansprüche 9 bis 11, **dadurch gekennzeichnet, daß** der Hebel (50) durch eine Ausnehmung (55) des Positionierelementes (44) hindurch geführt und mit einem Endstück (56) in einer Ausnehmung (57) des Tragelementes (41) abgestützt ist.

13. Vorrichtung nach einem der Ansprüche 1 bis 12, **dadurch gekennzeichnet, daß** das Basiselement (45) und das Positionierelement (44) durch mindestens eine Feder (53) gegeneinander verspannbar angeordnet sind.

14. Vorrichtung nach einem der Ansprüche 1 bis 13, **dadurch gekennzeichnet, daß** das Arretierelement (43) in einem entriegelten Zustand von mindestens einer Rastung fixierbar angeordnet ist.

15. Vorrichtung nach einem der Ansprüche 1 bis 14, **dadurch gekennzeichnet, daß** das Positionierelement (44) durch mindestens eine Keilfläche (51) gegenüber dem Basiselement (45) verspannbar angeordnet ist.

16. Vorrichtung nach einem der Ansprüche 1 bis 15, **dadurch gekennzeichnet, daß** das Blasformsegment (42) und das Tragelement (41) an zwei einander gegenüberliegenden Bereichen miteinander verbunden sind und daß die erste dieser Verbindungen durch das Arretierelement (43) und die zweite der Verbindungen durch mindestens eine unbeweglich angeordnete Klemmlasche (69) ausgebildet sind.

17. Blasstation zur Blasformung von Behältern aus einem thermoplastischen Material, die mindestens ein Blasformsegment aufweist, **dadurch gekennzeichnet, daß** das Blasformsegment von einer Vorrichtung gemäß mindestens einem der Ansprüche 1 bis 16 gehaltert ist.

18. Blasmaschine mit mindestens einer Blasstation, die mindestens ein Blasformsegment aufweist, **dadurch gekennzeichnet, daß** das Blasformsegment von einer Vorrichtung gemäß mindestens einem der Ansprüche 1 bis 16 gehaltert ist.

## Claims

1. A device for retaining a blow mould segment (42) in the region of a blowing station (3), which is provided with a support element (41) for the blow mould segment (42) and in which the blow mould segment (42) may be detachably fixed in the region of the support element (41) by at least one locking element (43), and in which the locking element (43) is designed both for providing a form-fitting retention and for providing a force-fitting retention of the blow mould segment (42), wherein the blow mould segment (42) is designed as a mould inner shell and the support element (41) is designed as a mould outer shell, and wherein the blow mould segment (42) may be fixed in the region of the support element (41) on two sides, **characterised in that** the locking element (43) retains the blow mould segment (42) with at least two locking clips (63), **in that** the locking clips (63) are rigidly connected to one another by a common base element (45), and **in that** the base element (45) may be positioned transversely to a longitudinal axis (67) of a positioning element (44), wherein the base element (45) forms the locking element (43) together with a positioning element (44).

2. A device according to Claim 1, **characterised in that** the base element (45) and a guide element (46) may be connected to one another with play by at least one connecting element (62).

3. A device according to Claim 2, **characterised in that** the connecting element (62) engages as a projection in a guide slot (68).

4. A device according to Claim 2 or 3, **characterised in that** the connecting element (62) is designed as a pin.

5. A device according to Claim 3, **characterised in that** the guide slot (68) is of a substantially L-shaped design.

6. A device according to one of Claims 1 to 5, **characterised in that** the base element (45) and the positioning element (44) are mounted on at least one common guide element (46).

7. A device according to one of Claims 1 to 6, **characterised in that** the positioning element (44) is mounted on the guide element (46) by means of an elongated hole (65).

8. A device according to one of Claims 1 to 7, **characterised in that** the base element (45) is mounted on the guide element (46) by means of a diagonal hole (66) and **in that** a longitudinal direction of the diagonal hole (66) is arranged obliquely to a longitudinal axis (67) of the positioning element (44).

9. A device according to one of Claims 1 to 8, **characterised in that** the locking element (63) may be positioned by a lever (50).

10. A device according to Claim 9, **characterised in that** the lever (50) is arranged as a rocking lever.

11. A device according to Claim 9 or 10, **characterised in that** the lever (50) is designed to be separable from the locking element (43).

12. A device according to one of Claims 9 to 11, **characterised in that** the lever (50) is guided through an opening (55) in the positioning element (44) and supported by an end piece (56) in an opening (57) in the support element (41).

13. A device according to one of Claims 1 to 12, **characterised in that** the base element (45) and the positioning element (44) are arranged such that they may be braced against one another by at least one spring (53).

14. A device according to one of Claims 1 to 13, **characterised in that** the locking element (43) is arranged such that it may be fixed in an unlocked state by at least one catch.

15. A device according to one of Claims 1 to 14, **characterised in that** the positioning element (44) is arranged such that it may be braced with respect to the base element (45) by at least one wedge-shaped surface (51).

16. A device according to one of Claims 1 to 15, **characterised in that** the blow mould segment (42) and the support element (41) are connected to one another at two mutually opposing regions and **in that** the first of these connections is formed by the locking element (43) and the second of the connections is formed by at least one immovably arranged clamping clip (69).

17. A blowing station for blow moulding containers from a thermoplastic material, which has at least one blow mould segment, **characterised in that** the blow mould segment is retained by a device according to at least one of Claims 1 to 16.

18. A blow-moulding machine having at least one blowing station, which has at least one blow mould segment, **characterised in that** the blow mould segment is retained by a device according to at least one of Claims 1 to 16.

## Revendications

1. Dispositif de retenue d'un segment de moule de soufflage (42) dans la région d'une station de soufflage (3), qui est doté d'un élément de support (41) pour ledit segment de moule de soufflage (42), et dans lequel le segment de moule de soufflage (42) peut être fixé de manière amovible, dans la région de l'élément de support (41), par moins un élément de blocage (43), et dans lequel ledit élément de blocage (43) est conçu aussi bien pour un maintien par emboîtement que pour un maintien par friction dudit segment de moule de soufflage (42), sachant que le segment de moule de soufflage (42) est réalisé en tant que coque intérieure et que l'élément de support (41) est réalisé en tant que coque extérieure, et sachant que le segment de moule de soufflage (42) pouvant être fixé des deux côtés dans la région de l'élément de support (41), **caractérisé en ce que** l'élément de blocage (43) maintient le segment de moule de soufflage (42) au moyen d'au moins deux pattes d'arrêt (63), que lesdites pattes d'arrêt (63) sont reliées rigidement entre elles par un élément de base (45) commun, et que ledit élément de base (45) peut être positionné transversalement par rapport à l'axe longitudinal (67) d'un élément de positionnement (44), sachant que l'élément de base (45), en commun avec l'élément de positionnement (44), forme l'élément de blocage (43).

2. Dispositif selon la revendication 1, **caractérisé en ce que** l'élément de base (45) et un élément de guidage (46) sont reliés ensemble, avec jeu, par un élément de liaison (62).

3. Dispositif selon la revendication 2, **caractérisé en ce que** l'élément de liaison (62) s'engage, sous la forme d'une saillie, dans une fente de guidage (68).

4. Dispositif selon revendication 2 ou 3, **caractérisé en ce que** l'élément de liaison (62) est réalisé sous la forme d'une goupille.

5. Dispositif selon la revendication 4, **caractérisé en ce que** la fente de guidage (68) présente essentiellement la forme d'un L.

6. Dispositif selon l'une des revendications 1 à 5, **caractérisé en ce que** l'élément de base (45) et l'élément de positionnement (44) sont montés sur au moins un élément de guidage (46) commun.

7. Dispositif selon l'une des revendications 1 à 6, **caractérisé en ce que** l'élément de positionnement (44) est monté avec un trou oblong (65) sur l'élément de guidage (46).

8. Dispositif selon l'une des revendications 1 à 7, **caractérisé en ce que** l'élément de base (45) est monté avec un trou diagonal (66) sur élément de guidage (46), et qu'une extension longitudinale dudit trou diagonal (66) est orientée obliquement par rapport à un axe longitudinal (67) de l'élément de positionnement (44).

9. Dispositif selon l'une des revendications 1 à 8, **caractérisé en ce que** l'élément de blocage (63) peut être positionné au moyen d'un levier de positionnement (50).

10. Dispositif selon la revendication 9, **caractérisé en ce que** le levier de positionnement (50) est réalisé sous la forme d'un levier basculant.

11. Dispositif selon revendication 9 ou 10, **caractérisé en ce que** le levier de positionnement (50) est réalisé de sorte à pouvoir être séparé de l'élément de blocage (43).

12. Dispositif selon l'une des revendications 9 à 11, **caractérisé en ce que** le levier de positionnement (50) est conduit à travers un l'évidement (55) et est soutenu, à une extrémité (56), dans un évidement (57) de l'élément de support (41).

13. Dispositif selon l'une des revendications 1 à 12, **caractérisé en ce que** l'élément de base (45) et l'élément de positionnement (44) peuvent être contraints, l'un par rapport à l'autre, par au moins un ressort (53).

14. Dispositif selon l'une des revendications 1 à 13, **caractérisé en ce que** l'élément de blocage (43) est agencé de sorte à pouvoir être fixé dans un état déverrouillé par au moins un organe d'arrêt.

15. Dispositif selon l'une des revendications 1 à 14, **caractérisé en ce que** l'élément de positionnement (44) peut être contraint par rapport à l'élément de base (45) par au moins une surface en forme de cale (51).

16. Dispositif selon l'une des revendications 1 à 15, **caractérisé en ce que** le segment de moule de soufflage (42) et l'élément de support (41) sont reliés ensemble dans deux régions opposées l'une à l'autre, et que la première de ces deux liaisons est réalisée par élément de blocage (43) et que la deuxième de ces liaisons est réalisée par au moins une patte de serrage immobile (69).

17. Station de formage par soufflage de récipients en matière thermoplastique, qui comprend au moins un segment de moule de soufflage, **caractérisée en ce que** le segment de moule de soufflage et maintenu par un dispositif selon au moins l'une des revendications 1 à 16.

18. Machine de soufflage, avec au moins une station de soufflage, qui est dotée d'au moins un segment de moule de soufflage, **caractérisée en ce que** le segment de moule de soufflage est maintenu par un dispositif selon au moins l'une des revendications 1 à 16.
